# DEMANDE DE BREVET EUROPEEN

(11) **EP 1 281 669 A1**
(43) Date de publication de la demande: **05.02.2003**
(21) Numéro de dépôt: 02291735.5
(22) Date de dépôt: 10.07.2002
(51) Int. Cl.: C01B 3/50

(54) **Procédé de récuperation d'hydrogène dans un effluent hydrocarboné gazeux, avec mise en oeuvre d'un réacteur membranaire**

(30) Priorité: 03.08.2001 FR 0110481
(71) Demandeur: INSTITUT FRANCAIS DU PETROLE, 92852 Rueil-Malmaison Cedex (FR)
(72) Inventeur: Gauthier, Thierry, 69530 Brignais (FR); Chau, Christophe, 92500 Rueil-Malmaison (FR); Uzio, Denis, 78160 Marly le Roi (FR); Prevost, Isabelle, 92500 Rueil-Malmaison (FR)

(57) **Abrégé**

Pour récupérer l'hydrogène dans un effluent gazeux riche en hydrocarbures, on met en oeuvre un procédé qui comprend :
- une étape (a) dans laquelle on fait passer un effluent gazeux riche en hydrocarbures au contact de la face amont d'une membrane sélective à l'hydrogène, à une pression P1 ;
- une étape (b) dans laquelle on fait circuler un flux contenant un ou plusieurs composé(s) insaturé(s) au contact de la face aval de ladite membrane, à une pression P2 inférieure à P1 et en présence d'un catalyseur, de manière à hydrogéner au moins en partie ledit (ou lesdits) composé(s) insaturé(s) au moyen d'au moins une partie de l'hydrogène passant par perméation de ladite face amont à ladite face aval de ladite membrane sélective ; et
- une étape (c) dans laquelle on transporte le flux contenant le (ou les) composé(s) hydrogéné(s) dans l'étape (b).

Le procédé peut comporter en outre une étape (d) dans laquelle on réalise une réaction de déshydrogénation du (ou des) composé(s) hydrogéné(s) transportés à l'étape (c), de manière à récupérer au moins une partie de l'hydrogène consommé par l'hydrogénation de l'étape (b).

## Description

L'objet de la présente invention est de proposer un procédé de récupération de l'hydrogène dans un effluent gazeux riche en hydrocarbures.

L'invention concerne plus particulièrement un procédé mettant en oeuvre la perméation de l'hydrogène à récupérer à travers une membrane sélective à l'hydrogène, puis l'hydrogénation d'au moins un composé insaturé contenu dans un flux circulant au contact de la phase aval de la membrane (par exemple au moins un hydrocarbure) pour favoriser les flux de perméation à travers la membrane grâce à la consommation instantanée de l'hydrogène, le transport de l'hydrogène dans le composé insaturé ainsi hydrogéné, et la déshydrogénation du composé hydrogéné permettant de restituer l'hydrogène séparé par la membrane sélective.

Le procédé de l'invention peut être défini en ce qu'il comprend la mise en oeuvre de :
- une étape (a) dans laquelle on fait passer un effluent gazeux riche en hydrocarbures au contact de la face amont d'une membrane sélective à l'hydrogène, à une pression P1 ;
- une étape (b) dans laquelle on fait circuler un flux contenant un ou plusieurs composé(s) insaturé(s) au contact de la face aval de ladite membrane, à une pression P2 inférieure à P1 et en présence d'un catalyseur, de manière à hydrogéner au moins en partie ledit (ou lesdits) composé(s) insaturé(s) au moyen d'au moins une partie de l'hydrogène passant par perméation de ladite face amont à ladite face aval de ladite membrane sélective ; et
- une étape (c) dans laquelle on transporte le flux contenant le (ou les) composé(s) hydrogéné(s) dans l'étape (b).

Le procédé de l'invention s'adresse d'une manière générale à la récupération de l'hydrogène dans des charges consistant en tous effluents gazeux contenant des quantités non négligeables d'hydrogène, tels que les coupes de gaz sec issues de procédés tels que le craquage catalytique en lit fluidisé (FCC selon la terminologie anglo-saxonne "Fluid Catalytic Cracking"), le vaporeformage, le reformage catalytique, la gazéification, l'oxydation partielle, le procédé autotherme associant reformage et oxydation partielle ou encore la cokéfaction et la viscoréduction.

Plus précisément, l'invention concerne la récupération de l'hydrogène produit pendant le craquage catalytique en lit fluidisé de coupes hydrocarbonées lourdes.

On sait que le FCC est un procédé de conversion alimenté par des coupes hydrocarbonées lourdes, dont le point d'ébullition est typiquement supérieur à 360 °C à pression atmosphérique. La charge est vaporisée au contact de catalyseur chaud (particules fines dont le diamètre moyen est généralement compris entre 50 et 100 µm, dont la densité de grain est comprise généralement entre 1000 et 2000 kg/m³, essentiellement constituées de silice et d'alumine) et réagit dans un réacteur allongé de forme sensiblement tubulaire, à des températures en sortie de réacteur généralement comprises entre 480 et 700 °C, typiquement de l'ordre de 500 à 580 °C pendant une durée comprise entre 50 ms et 10 s, typiquement de 1 à 5 s, le rapport entre le débit massique de catalyseur et la charge étant généralement compris entre 3 et 20, typiquement 5 à 8. En sortie du réacteur tubulaire, les effluents gazeux sont séparés des particules de catalyseur. Les particules de catalyseur, contenant le dépôt carboné (coke) formé pendant la réaction, sont envoyées dans une enceinte de régénération continue où le coke brûle et réchauffe ainsi le catalyseur pour fournir la chaleur nécessaire à la vaporisation de la charge et aux réactions de craquage. Les molécules de la charge se transforment grâce aux réactions de craquage en molécules plus légères. Il est ainsi possible d'obtenir de 20 à 90 % en poids de molécules dont la température d'ébullition est inférieure à 360 °C, plus typiquement de 50 à 75 %. Les molécules gazeuses issues du réacteur sont évacuées de la zone réactionnelle après séparation des particules de catalyseur et vont dans une zone de fractionnement - purification destinée à répartir les produits de craquage dans des coupes alimentant les différents pools de produits de la raffinerie. La première étape du fractionnement consiste à effectuer une distillation à une pression aussi proche que possible de la pression atmosphérique. Il est possible par distillation de séparer les coupes lourdes peu craquées (bouillant à des températures typiquement supérieures à 300-380 °C en fond de colonne. Les coupes intermédiaires (bouillant typiquement à des températures comprises entre 100-200 °C et 300-380 °C) sont soutirées latéralement de la colonne de distillation. En tête de colonne, les produits légers (essence légère, gaz de pétrole liquéfié GPL, éthane, éthylène, eau, hydrogène, H₂S, CO, CO₂, COS, etc.) subissent une étape de condensation à une température comprise entre 30 et 100 °C, typiquement voisine de 30-60 °C pour notamment séparer l'eau des produits gazeux à une pression proche de la pression atmosphérique, typiquement inférieure à 0,2 MPa (absolus). Les produits condensés sont généralement envoyés en reflux dans la colonne pour ce qui concerne les hydrocarbures les moins denses et vers le traitement des eaux acides pour la phase liquide essentiellement aqueuse. Les produits non condensés sont généralement comprimés par un ou plusieurs étages de compression à environ 1 à 2 MPa (absolus).

Un ou plusieurs étages d'absorption, puis de lavage par contact avec des coupes hydrocarbonées liquides et des solutions aqueuses basiques telles que des amines permet d'éliminer progressivement l'essentiel des hydrocarbures contenant plus de 2 atomes de carbone, les traces d'eau et l'H₂S.

Après séparation et purification des différents produits issus de la réaction de craquage, les produits les plus légers, constitués essentiellement de molécules contenant moins de trois atomes de carbone ainsi que de gaz hydrogène, sont généralement envoyés au réseau de "fuel-gaz" de la raffinerie et utilisés comme combustible. Or, cette coupe contient une quantité non négligeable d'hydrogène qui peut représenter de 5 à 50 % en mole, typiquement environ 20 %. Il peut être intéressant de récupérer cet hydrogène pour l'utiliser dans les unités de raffinage d'hydroconversion telles que par exemple les procédés d'hydrotraitement de gazole, d'essence ou par exemple les procédés d'hydrogénation sélective de coupes C2, C3 et C4. Ces procédés sont en effet consommateurs d'hydrogène dont la production est coûteuse (en 2000, on estime que le coût de l'hydrogène est proche de 1000 $/ tonne). La récupération de l'hydrogène des effluents de FCC, qui n'est valorisé que comme combustible dans le réseau "fuel-gaz" peut donc permettre au raffineur de faire des économies substantielles.

A l'issue de cette purification, on obtient généralement un gaz contenant essentiellement de l'éthane, de l'éthylène, du méthane, de l'hydrogène, de l'azote et des traces de CO, de CO₂, de COS, que l'on appelle le gaz sec de FCC. Ce gaz est le plus souvent envoyé au réseau "fuel-gaz" de la raffinerie. En amont de la vanne contrôlant la décharge du gaz sec dans le réseau "fuel-gaz", la pression est en général comprise entre 0,5 et 1,5 MPa, typiquement 1 à 1,2 MPa et la température est de 30 à 100 °C, typiquement de 50 à 60 °C.

La composition du gaz sec produit à partir de l'unité de FCC dépend essentiellement des conditions opératoires (température initiale du catalyseur au bas du réacteur, température en sortie du réacteur, rapport entre le débit massique de catalyseur et la charge), de la nature du catalyseur et des métaux éventuellement présents sur celui-ci, notamment le nickel, du dimensionnement du réacteur favorisant ou non le contact catalytique ou la dégradation thermique des produits et du niveau de conversion de la charge hydrocarbonée. Le rendement en gaz sec, pour des conditions typiques de craquage (température en sortie de réacteur de 510-530 °C, rapport entre le débit massique de catalyseur et la charge compris entre 5 et 7, conversion comprise entre 60 et 80 %), est généralement compris entre 1,5 et 5 % poids de la charge du FCC. Cette valeur peut être plus importante, notamment si la température du réacteur est plus importante.

A titre d'exemple, sur une unité traitant 65 000 barils de charge par jour, on a observé un rendement en gaz sec après séparation et lavage de 3,64 % poids, ce qui correspond à une quantité de 15,04 t/h de gaz secs. Le tableau ci-dessous donne la composition du gaz sec après séparation et lavage.

**Tableau 1**

| **Composition typique du gaz sec avant décharge dans le réseau "fuel-gaz"** | | | |
|---|---|---|---|
| Constituant | Débit massique (t/h) | Débit molaire (kmol/h) | % molaire |
| H₂ | 0,43 | 215,00 | 27,0 |
| Méthane | 3,67 | 229,38 | 29,0 |
| Ethane | 2,75 | 91,67 | 11,6 |
| Ethylène | 3,65 | 130,36 | 16,5 |
| Propane | 0,35 | 7,95 | 1,0 |
| Propylène | 2,16 | 51,43 | 6,5 |
| Isobutane | 0,14 | 2,41 | 0,3 |
| Isobutène | 0,04 | 0,86 | 0,1 |
| n-butènes | 0,04 | 0,71 | 0,1 |
| n-butane | 0,05 | 0,71 | 0,1 |
| CO | 0,07 | 2,50 | 0,3 |
| CO₂ | 0,10 | 2,27 | 0,3 |
| N₂ | 1,59 | 56,79 | 7,2 |
| Total | 15,04 | 792,04 | 100,0 |

On voit dans l'exemple du tableau 1 que le gaz sec contient en moles environ 27 % mole d'hydrogène, ce qui constitue un débit massique d'environ 430 kg/h.

Dans ce gaz peuvent subsister des composants autres que ceux mentionnés dans le tableau 1 à l'état de traces, tels que l'oxygène (10-500 ppm, typiquement 200 ppm), l'H₂S (1 à 10 ppm, typiquement 1ppm), l'ammoniac (10-500 ppm, typiquement 100 ppm), des NO_{X} (2-100 ppm, typiquement 20 ppm), de l'arsine (100-1000 ppb, typiquement 300 ppb), le COS (0,1 à 10 ppm, typiquement 1 ppm), des mercaptans (1 à 500 ppm, typiquement 10 ppm) et de l'HCN (1 à 10 ppm, typiquement 2 ppm).

Un objet de l'invention consiste donc à récupérer l'hydrogène des effluents de procédés riches en hydrogène et de manière préférée de gaz sec de FCC.

Les techniques de séparation par membrane utilisées dans le procédé de l'invention sont généralement aisées à mettre en oeuvre, car les unités de perméation sont le plus souvent modulaires, compactes, opérées en continu, avec peu ou pas de pièces tournantes, ce qui limite les interventions de maintenance, et enfin elles sont relativement peu consommatrices d'énergie. Toutefois, les investissements qu'elles nécessitent sont liés au coût de la membrane et des modules. Par ailleurs, dans le cas du procédé selon l'invention, les flux de charge à traiter sont généralement très importants. Ainsi par exemple, dans le cas préféré d'une charge issue d'un procédé de craquage catalytique en lit fluidisé, il est courant de traiter des charges dont le débit est de plusieurs centaines de tonnes par heure. Les membranes utilisables dans le procédé selon l'invention doivent donc être capables de traiter de tels flux, tout en présentant une sélectivité de séparation de l'hydrogène suffisante.

Tout type de membrane peut *a priori* être utilisé dans le procédé selon l'invention. Toutefois, on utilisera de préférence des membranes de très haute sélectivité à l'hydrogène, comme par exemple des membranes inorganiques à base de palladium et d'argent, des membranes carbone ou bien encore des membranes organiques, car il a été trouvé par la demanderesse que ce type de membranes permet d'ores et déjà de traiter des débits de charge élevés, avec une sélectivité de séparation de l'hydrogène importante et des surfaces de membrane compatibles avec une utilisation industrielle, tout en permettant de limiter la passage de composés indésirables comme le monoxyde de carbone et l'hydrogène sulfuré, ces derniers risquant de limiter l'activité du catalyseur d'hydrogénation utilisé dans le compartiment où l'on recueille le perméat.

Les membranes inorganiques présentent l'avantage d'être très stables thermiquement et suffisamment sélectives. Dans le cas de la séparation de l'hydrogène, on pense notamment aux membranes à base de fibres de carbone commercialisées par exemple par la société Carbon Membranes Ltd du groupe CLAL, et qui sont particulièrement bien adaptées à la séparation d'hydrogène. Ces membranes permettent, par exemple, d'obtenir 3000 m³/h d'hydrogène à partir d'unités compactes de moins de 3 m² au sol, dans des conditions de températures et de pressions comprises entre, par exemple, 60 et 120 °C, avec des pressions de charge notamment proches de 1,6 MPa absolus.

D'autres matériaux membranaires peuvent être avantageusement mis en oeuvre, comme par exemple les membranes à base de silice microporeuse déposée sur un support poreux tel que de l'alumine, les membranes zéolithes supportées par des matrices poreuses ou métalliques, ou bien les membranes de type oxydes mixtes à transport sélectif d'hydrogène, ou bien encore les membranes comprenant un alliage de palladium avec un autre métal tel que par exemple de l'argent. En particulier, des membranes de ce type, commercialisées par Johnson Matthey Ltd., permettent d'obtenir des flux d'hydrogène de 30 m³/h environ avec une pureté supérieure à 99,9 %. De telles membranes commerciales ont des épaisseurs d'alliage palladium/argent de l'ordre de 150 micromètres. Récemment, des progrès significatifs de réduction de l'épaisseur de la couche séparatrice ont été obtenus avec des membranes de type palladium/argent supportées dans des matrices céramiques poreuses, par exemple par dépôt de métal par voie non électrolytique (dite *"electroless plating deposition*" selon la terminologie anglo-saxonne) ou encore par dépôt de couche mince en phase vapeur et enfin par pulvérisation cathodique. Dans ces cas cités de manière non exhaustive, l'épaisseur peut être réduite à quelques micromètres et les flux d'hydrogène sont par suite considérablement augmentés (les flux étant inversement proportionnels à l'épaisseur de membrane). D'autres matériaux métalliques en phase de développement et de commercialisation sont constitués de trois couches successives de type : palladium/argent, métal perméable du groupe 5 de la classification périodique (incluant le vanadium, le niobium et le tantale), palladium/argent. Les couches périphériques palladium/argent sont très minces (quelques micromètres) et la couche métallique médiane, de très grande perméabilité à l'hydrogène, confère une très haute résistance mécanique au matériau. A nouveau, des flux d'hydrogène de très haute pureté peuvent être obtenus dans ce cas et de tels matériaux peuvent avantageusement être mis en oeuvre dans le procédé de l'invention.

Les membranes inorganiques utilisables dans le procédé selon l'invention seront donc de préférence choisies dans le groupe constitué par : les zéolithes, les membranes à base de silice poreuse et plus particulièrement à base de silice microporeuse déposée sur un support poreux, les membranes à base de fibres de carbone, les oxydes mixtes et les membranes métalliques comprenant un alliage à base de palladium.

Les membranes organiques utilisables de préférence dans le procédé selon l'invention comprennent de préférence un polymère tel que, par exemple, au moins un polymère choisi dans le groupe constitué par les polyimides, les polyaramides, les polycarbonates, les polysulfones, ou les fluorures de polyvinyle. Il est en particulier avantageux d'utiliser les membranes à base de polymères, notamment à base de de polyaramides, comme celles commercialisées par la société MEDAL ou bien encore à base de polysulfones sur fibres polysiloxanes, comme celles commercialisées par MONSANTO.

Ces membranes organiques à base de polyaramides permettent de traiter des flux de charge contenant de l'hydrogène très importants, par exemple 90 000 m³ par heure, et d'obtenir des flux de perméats variables en fonction des pressions opératoires et de la température utilisées, par exemple de l'ordre de 15 000 m³ par heure. Une telle séparation peut être réalisée dans des modules compacts présentant une surface au sol de l'ordre de 7 m². Dans le cas préféré d'une charge provenant d'un réacteur catalytique en lit fluidisé, des débits de gaz sec par exemple de l'ordre de 15 000 m³ par heure peuvent donc être traités par des unités membranaires relativement compactes. Grâce aux progrès réalisés sur les membranes de type polyimides et polyaramides, ces matériaux membranaires organiques peuvent avantageusement être mis en oeuvre dans le procédé selon l'invention à des températures allant par exemple jusqu'à 180 °C, voire 220 °C, ce qui permet d'obtenir la synergie optimale perméation/hydrogénation.

Les matériaux membranaires peuvent être par exemple sous forme de fibres creuses, de tubes, de spirales ou peuvent être plans. Les systèmes compacts de type fibres creuses et systèmes multi-canaux sont préférés, mais toute géométrie peut *a priori* convenir. La préférence sera donnée à tout système permettant de mettre en oeuvre des surfaces de membranes importantes dans un module compact, ce qui permet de traiter des débits de charge élevés avec un système compact en limitant l'encombrement, l'investissement et les coûts opératoires.

Les conditions opératoires de l'étape de séparation par membrane et d'hydrogénation couplées utilisées dans le procédé selon l'invention (étapes (a) et (b)) sont généralement les suivantes:
- pression d'alimentation en amont de la membrane : de 0,2 à 5 MPa, de préférence de 0,5 et 2,5 MPa et de manière plus préférée de 1 à 1,5 MPa ;
- pression du perméat (en aval de la membrane) : de 0,1 à 0,5 MPa et de manière plus préférée de 0,2 à 0,4 MPa ;
- température : dans le cas d'une membrane organique, de 20 à 180 °C, de préférence entre 70 à 150 °C, de manière plus préférée de 80 à 120 °C ; ou dans le cas de membranes inorganiques, de 20 °C à 280 °C, de préférence de 60 °C à 200 °C, de manière plus préférée de 100 à 200 °C ;
- vitesse volumique horaire (VVH) du flux contenant le(s) composé(s) à hydrogéner: de 0,5 à 30 h⁻¹, de préférence de 2 à 20 h⁻¹ par rapport au catalyseur mis en jeu dans l'étape (b) d'hydrogénation.

Ces conditions sont notamment compatibles avec les étapes intégrées de perméation (extraction d'hydrogène de la charge) et de réaction (hydrogénation catalysée d'hydrocarbures) et favorisent la synergie du couplage séparation/réaction en optimisant la récupération d'hydrogène. Dans le cas de la récupération d'hydrogène de FCC, les effluents riches en hydrogène peuvent au préalable être réchauffés directement avant d'être mis en contact avec le réacteur membranaire ou par échange de chaleur dans le perméateur.

Par séparation membranaire, on obtient donc un perméat contenant très majoritairement de l'hydrogène et de faibles quantité d'hydrocarbures et d'impuretés présentes initialement dans la charge, et un rétentat appauvri en hydrogène, mais contenant l'essentiel des hydrocarbures et impuretés initialement présents dans la charge. Ce perméat, mélangé à une alimentation d'hydrocarbures contenant de manière préférée des molécules aromatiques réactives, est mis au contact d'un catalyseur qui va favoriser les réactions d'hydrogénation, dans les conditions de température et de pression totale régnant dans le compartiment aval (où circule le perméat riche en hydrogène). L'hydrogène ayant traversé la membrane est alors consommé dans les réactions d'hydrogénation catalytique et le flux d'hydrogène à travers la membrane s'en trouve augmenté.

L'alimentation en composés organiques insaturés intervenant dans la réaction d'hydrogénation peut également consister en d'autres molécules insaturées que les hydrocarbures aromatiques, telles que par exemple de l'acétone ou des oléfines, avec mise en oeuvre des catalyseurs et des conditions opératoires appropriées.

Tout catalyseur d'hydrogénation connu de l'homme du métier peut être utilisé dans l'étape (b) d'hydrogénation, où le perméat (contenant l'hydrogène ayant traversé la membrane) est recueilli. Ainsi les métaux du groupe VIII et plus particulièrement ceux du groupe du platine peuvent être mis en oeuvre dans cette section catalytique. Les formations multimétalliques pourront également être avantageusement utilisées. Ces métaux pourront être déposés sur tout type de support organique ou inorganique. Le support du catalyseur selon l'invention comporte par exemple un oxyde réfractaire, généralement choisi parmi les oxydes de métaux des groupes II, III ou IV de la classification périodique des éléments, tels que par exemple les oxydes de magnésium, d'aluminium, de silicium, de titane, de zirconium et de thorium, pris seuls, en mélange entre eux ou en mélange avec d'autres oxydes de métaux de la classification périodique. On peut aussi utiliser le charbon ou des zéolithes (tamis moléculaires) de type X, Y, faujasite, mordénite, ZSM-5, ZSM-4 ou ZSM-8, sans que ces exemples soient limitatifs, ainsi que les mélanges d'oxydes de métaux des groupes II, III et/ou IV avec un matériau zéolithique.

Le catalyseur peut se présenter sous forme de billes ou d'extrudés et peut être placé au contact de la charge réactive et du perméat de la section membranaire. Dans une autre configuration, la phase active métallique peut être partie intégrante du matériau membranaire. Dans ce dernier cas, la phase active (multi)métallique sera déposée par toute technique connue de l'homme du métier au sein de la couche séparatrice de la membrane.

En fonction des concentrations en contaminants (qui sont liées à la sélectivité de la membrane) et des conditions opératoires en partie fixées par la zone séparatrice, on pourra choisir la phase active parmi les métaux du groupe VIII, utilisés seul ou en combinaison. Le nickel ou le platine pourront être avantageusement choisis pour leurs performances en hydrogénation des aromatiques. Le catalyseur subira au moins une étape d'activation qui pourra être effectuée *in situ,* c'est à dire dans la section réactionnelle, ou *ex situ* préalablement au chargement du catalyseur. La consommation d'hydrogène lors de l'hydrogénation, par exemple, d'une charge (3) allant vers l'unité de reformage catalytique, est particulièrement favorable à l'étape de perméation, car elle induit une forte diminution de pression partielle d'hydrogène dans le perméat. Par suite, la différence de pression partielle d'hydrogène augmentant entre la charge et le perméat, la perméation d'hydrogène s'en trouve favorisée.

Le procédé de l'invention peut comporter en outre une étape (d) dans laquelle on réalise une réaction de déshydrogénation du (ou des) composé(s) hydrogéné(s) transportés à l'étape (c), de manière à récupérer au moins une partie de l'hydrogène consommé par l'hydrogénation de l'étape (b).

On sait en effet qu'il existe un procédé produisant de l'hydrogène à partir d'hydrocarbures. Il s'agit du procédé de reformage catalytique, permettant l'amélioration de l'indice d'octane des coupes naphta issues de la distillation atmosphérique. Ce procédé est généralement alimenté par des coupes légères issues pour l'essentiel de la distillation atmosphérique du pétrole brut, de point d'ébullition compris par exemple entre 80 et 180 °C et contenant des quantités limitées d'aromatiques (généralement comprises entre 5 et 20 %, typiquement de 7 à 15 % en volume) et qui contiennent typiquement entre 6 et 10 atomes de carbone par molécule.

En mettant notamment en oeuvre des réactions de déshydrogénation des composés naphténiques, de déshydrocyclisation des composés paraffiniques et d'isomérisation des composés paraffiniques et naphténiques au moyen d'un catalyseur comprenant un support d'alumine faiblement chlorée (teneur en chlore voisine de 1 % poids) sur lequel ont été déposés des métaux tels que le platine, au titre de métal principal, le plus souvent associé à un second métal tel que par exemple le rhénium, l'iridium, l'étain ou le germanium, le procédé de reformage catalytique permet d'augmenter l'indice d'octane des essences mais aussi de produire de l'hydrogène. Les procédés de reformage catalytique permettent de produire de l'hydrogène avec des rendements typiquement compris entre 2 et 4 % en poids d'hydrogène par rapport à la charge de l'unité de reformage.

L'invention a donc plus particulièrement pour objet un procédé comprenant l'hydrogénation d'au moins une partie d'une coupe légère alimentant un procédé de reformage catalytique avec les gaz secs produits au FCC et ce, à partir d'hydrogène extrait par une membrane sélective. Cela a pour avantage de capter l'hydrogène produit au FCC sous forme d'un mélange gazeux d'hydrocarbures, de le transporter sous la forme d'un hydrocarbure hydrogéné liquide et de le récupérer purifié par déshydrogénation de l'hydrocarbure dans le procédé de reformage catalytique.

L'hydrogénation d'hydrocarbures est favorisée par l'utilisation de catalyseurs. Les hydrocarbures aromatiques contenus dans les charges alimentant le reformage catalytique (contenant généralement de 6 à 10 atomes de carbone) peuvent s'hydrogéner dans des conditions modérées de pression et de température, moyennant l'utilisation de catalyseurs appropriés. Néanmoins, leur réactivité hydrogénante est généralement moindre que celle des oléfines légères comme l'éthylène, également présent en mélange dans les gaz secs de FCC, qui sont beaucoup plus difficiles ensuite à déshydrogéner. L'hydrogénation directe d'une charge de reformage au contact de gaz sec en présence de catalyseur conduirait donc inévitablement à la conversion de l'éthylène en éthane, ce qui conduirait sans doute à perdre de 10 à 60 % de l'hydrogène, typiquement 30 % de celui-ci. De plus des impuretés présentes dans les gaz secs à l'état de traces telles que H₂S, CO, COS, des mercaptans, HCN, etc., peuvent avoir un caractère empoisonnant pour les catalyseurs d'hydrogénation. L'hydrogénation directe d'une charge de reformage catalytique au contact de gaz sec pourrait donc conduire à une désactivation rapide du catalyseur au contact des poisons présents dans le gaz sec, même à l'état de traces. L'originalité de cet aspect particulier de l'invention consiste donc à séparer dans une étape initiale l'hydrogène contenu dans le gaz sec de FCC grâce à l'utilisation d'une membrane sélective à l'hydrogène. Les flux de perméation à travers une telle membrane dépendent des pressions partielles de l'hydrogène de part et d'autre de la membrane. La consommation de l'hydrogène après perméation permet d'accélérer les flux de perméation et donc de limiter les surfaces requises pour séparer efficacement l'hydrogène des autres constituants formant le gaz sec.

L'invention est particulièrement applicable aux raffineries comportant un procédé de FCC et un procédé de reformage catalytique, ce qui représente la majorité des raffineries modernes.

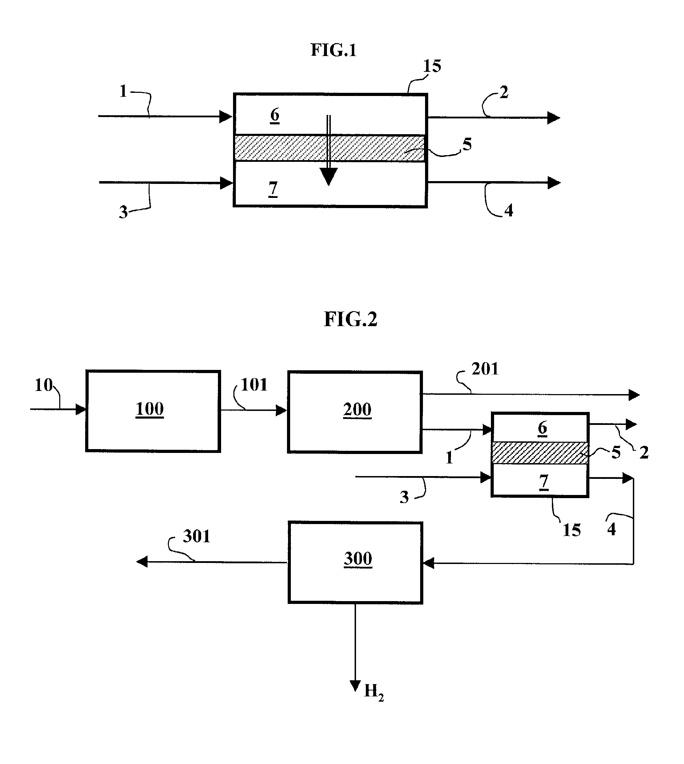

L'invention sera mieux comprise à la lecture de la description qui suit, en liaison avec les figures 1 et 2 annexées.

Sur la figure 1, on a représenté le coeur de l'invention qui consiste à alimenter une enceinte (15) par un gaz riche en hydrogène (1) provenant par exemple du FCC, tel que le gaz sec. L'enceinte est séparée en deux chambres (6) et (7) séparées par une membrane (5) laissant passer sélectivement l'hydrogène de l'enceinte (6) en amont à l'enceinte (7) en aval, cette membrane (5) pouvant être par exemple plane, spiralée ou constituée d'un ou plusieurs cylindres. L'enceinte (7) est alimentée par une coupe d'hydrocarbures légers (3), essentiellement liquide contenant au moins 4 atomes de carbone, et au plus 15 atomes de carbone, et au minimum une proportion d'hydrocarbures aromatiques suffisante pour absorber par hydrogénation tout l'hydrogène traversant la membrane (5) ; l'enceinte (7) est remplie au moins partiellement d'un catalyseur favorisant l'hydrogénation des aromatiques de la coupe (3) à une pression de 0,1 à 1,5 MPa (absolus) et à une température de 20 à 280 °C. Les effluents du compartiment (6), c'est-à-dire essentiellement le gaz sec exempt de l'essentiel de l'hydrogène, sont évacués du compartiment (6) par le conduit (2) et les effluents du compartiment (7), c'est-à-dire la coupe d'hydrocarbures (3) hydrogénée par réaction avec l'hydrogène ayant traversé la membrane (5) sont évacués du compartiment (7) par le conduit (4) Il est à noter que dans la figure (1), les flux (1) et (3) d'une part et (2) et (4) d'autre part circulent à co-courant (flux circulant dans le même sens). Une configuration à contre-courant ou à courants croisés peut tout à fait être appliquée.

Ce procédé de séparation par perméation gazeuse peut en particulier être appliqué à la séparation et l'extraction d'hydrogène. On collecte dans le compartiment aval (7) (selon la figure 1) de l'unité de séparation par membrane un perméat qui contient l'hydrogène ayant traversé la membrane. Dans le procédé selon l'invention, le compartiment aval (7) comprend également des grains de catalyseur, ledit catalyseur favorisant les réactions d'hydrogénation. En sortie du compartiment amont (6) du perméateur, un rétentat (2) est obtenu, qui dans le cas présent est appauvri en hydrogène et contient l'essentiel des hydrocarbures et impuretés initialement présents dans la charge. Dans le procédé selon l'invention, la récupération d'hydrogène est donc obtenue en particulier par la mise en oeuvre d'un réacteur membranaire assurant le couplage séparation par membrane /réaction catalytique.

Sur la figure 2, on a représenté l'invention mise en oeuvre dans le cadre d'une raffinerie possédant un FCC et un procédé de reformage catalytique. La charge du FCC (10) est convertie dans la zone réactionnelle (100) et produit des effluents gazeux (101) qui sont séparés en coupes de produits contenant au moins 3 atomes de carbone (201) (LPG, essence, etc.) et en gaz secs (1) dans la zone de fractionnement / purification (200). Le gaz sec alimente l'enceinte (15) dans un compartiment (7) situé en amont de la membrane (5) permettant la perméation sélective de l'hydrogène. Le gaz sec exempt de la majorité de son hydrogène est évacué (2) vers le réseau "fuel-gaz" pour servir de combustible. L'enceinte (15) est alimentée en aval de la membrane (5) dans le compartiment (7) par une coupe naphta (3), par exemple issue au moins en partie de la distillation atmosphérique de pétrole brut. Elle est hydrogénée dans le compartiment (7) en présence au moins partiellement de catalyseur favorisant l'hydrogénation des aromatiques de la coupe (3) à une pression comprise entre 0,1 et 1,5 MPa (absolus) et à une température comprise entre 20 et 280 °C. Le naphta hydrogéné est alors dirigé (4) vers le procédé de reformage catalytique (300), où le naphta, par cyclisation et déshydrogénation voit son indice d'octane substantiellement amélioré et devient une coupe dite reformat (301), l'hydrogène étant produit par la cyclisation et la déshydrogénation.

Les membranes de perméation gazeuse permettent, sous l'effet de différences de pression, de séparer des mélanges gazeux par transfert sélectif à travers une couche mince et continue d'un polymère, de matériau composite (par exemple un polymère chargé en cristallites minéraux), ou à travers un matériau inorganique de type céramique (membrane silice, zéolithe, oxyde mixte, *pérovskites* par exemple) ou une membrane carbone par exemple, ou bien encore un matériau métallique dense (membrane palladium et palladium/argent par exemple).

Ce procédé de séparation par perméation gazeuse peut en particulier être appliqué à la séparation et l'extraction d'hydrogène. On collecte dans le compartiment aval (7) (selon la figure 1) de l'unité de séparation par membrane un perméat qui contient l'hydrogène ayant traversé la membrane. Dans le procédé selon l'invention, le compartiment aval (7) comprend également des grains de catalyseur, ledit catalyseur favorisant les réactions d'hydrogénation. En sortie du compartiment amont (6) du perméateur, un rétentat (2) est obtenu, qui dans le cas présent est appauvri en hydrogène et contient l'essentiel des hydrocarbures et impuretés initialement présents dans la charge. Dans le procédé selon l'invention, la récupération d'hydrogène est donc obtenue en particulier par la mise en oeuvre d'un réacteur membranaire assurant le couplage séparation par membrane /réaction catalytique.

La quantité d'hydrogène que l'on peut recueillir dans le perméat et sa pureté dépendent de plusieurs facteurs, notamment de la composition du gaz alimentant l'unité de séparation par membrane, de la température, de la pression d'alimentation, de la pression à laquelle on récupère le perméat, de la surface de membrane mise en oeuvre et donc de la géométrie de l'unité de perméation, ainsi que de la perméabilité et de la sélectivité de la membrane.

En particulier, la force motrice de perméation est particulièrement élevée lorsque la différence de pression entre la charge et le perméat augmente. La consommation par une réaction chimique de l'hydrogène ayant traversé la membrane est donc particulièrement favorable au transfert per-membranaire, car cette consommation d'hydrogène dans le perméat abaisse la pression partielle d'hydrogène dans celui-ci, augmentant ainsi la différence de pression d'hydrogène entre la charge et le perméat. Dans ce cas, il est possible d'extraire des quantités élevées d'hydrogène à partir d'une charge dont le débit est élevé. La mise en oeuvre d'une circulation d'hydrocarbures dans le compartiment aval (7) (où l'hydrogène est mis en contact avec le catalyseur d'hydrogénation) est également particulièrement favorable au transfert d'hydrogène, car la pression d'hydrogène diminue dans ce même compartiment, ce qui augmente la différence de pression entre la charge et le perméat et par conséquent la force motrice de perméation. Cette circulation d'hydrocarbures (3) dans le compartiment aval (7) du perméateur peut être effectuée tant à contre-courant qu'à co-courant par rapport à l'alimentation contenant l'hydrogène à extraire.

Le procédé décrit dans l'invention met en oeuvre en particulier une unité où l'extraction d'hydrogène, effectuée au moyen d'une membrane perméable et sélective à l'hydrogène, est couplée à une réaction chimique, en l'occurrence une hydrogénation catalytique. Ce couplage séparation / réaction est particulièrement favorable tant à la perméation (augmentation de la force de transfert membranaire par consommation de l'hydrogène ayant traversé la membrane) qu'à la réaction catalytique d'hydrogénation (apport sélectif d'hydrogène à travers la membrane dans le lit catalytique). Le réacteur membranaire ainsi constitué permet donc une synergie séparation/réaction, en intégrant les deux étapes, et il apporte un gain substantiel en termes de compacité, de coûts opératoires, d'investissements et d'efficacité (rendement, sélectivité) notamment par rapport à un procédé où lesdites étapes de séparation/réaction seraient découplées.

Il est à noter que la membrane permet d'extraire sélectivement l'hydrogène d'une charge contenant des hydrocarbures et des impuretés comme CO, COS et H₂S. Ces molécules (CO et H₂S notamment) pourraient altérer l'activité du solide catalytique utilisé pour l'hydrogénation. L'opération intégrée de séparation par membrane permet d'éviter la présence de tels composés dans le lit catalytique, puisque la membrane, très sélective vis-à-vis de l'hydrogène, ne laisse passer qu'une fraction négligeable de ces espèces. Dans le cas préféré selon l'invention d'une charge type gaz sec de craquage catalytique en lit fluidisé, ces impuretés sont recueillies dans le rétentat (fraction n'ayant pas traversé la membrane) et n'ont par conséquent pas d'effet néfaste de désactivation sur le catalyseur dans le compartiment où circule le perméat.

Dans le cas où les teneurs en hydrogène sulfuré et monoxyde de carbone sont très élevées, une membrane adaptée, de haute sélectivité à l'hydrogène, sera mise en oeuvre afin d'extraire l'hydrogène en évitant la perméation de ces impuretés H₂S et CO, qui peuvent limiter l'activité du catalyseur d'hydrogénation dans le perméat. Dans le cas des membranes métalliques à base de palladium, il est généralement admis que des concentrations maximales de 5 ppm en H₂S et 3 % en volume de CO peuvent être tolérées par le matériau membranaire métallique, pour des raisons d'adsorption de ces molécules à la surface de la membrane, ce qui peut nécessiter de mettre en oeuvre des surfaces de membranes plus importantes. Si des charges contenaient des concentrations de ces impuretés supérieures aux valeurs précitées, le choix du matériau membranaire serait orienté sur des membranes de type par exemple organique et carbone, afin d'obtenir un procédé performant et limiter l'investissement en termes de surfaces de membranes. Des progrès récents d'amélioration de stabilité et de sélectivité des membranes métalliques et des améliorations futures permettent néanmoins d'envisager l'utilisation de membranes métalliques avec de telles charges contenant des teneurs relativement élevées en ces impuretés.

Une autre possibilité d'utilisation avec des charges riches en impuretés et provenant non nécessairement d'unités de craquage catalytique en lit fluidisé est la mise en oeuvre de membranes métalliques après une étape préliminaire de captation sélective de H₂S et CO, par exemple par adsorption préférentielle ou avec une membrane perméable à ces espèces pour réduire ces teneurs à des valeurs acceptables pour le réacteur catalytique à membrane. Dans ce dernier cas, le procédé demeure identique à la description précédente, avec une prime extraction de H₂S et CO.

Les exemples suivants illustrent l'invention sans en limiter la portée. Dans ces exemples, le taux de récupération de l'hydrogène représente le rapport molaire entre l'hydrogène récupéré et l'hydrogène présent dans le gaz sec de départ. La VVH correspond à la vitesse volumique horaire exprimée en h-1, calculée par le rapport du débit volumique de la charge de reformage par le volume de catalyseur d'hydrogénation.

### Exemple 1

Dans cet exemple, la charge à séparer présente une composition typique d'un gaz sec issu de craquage catalytique en lit fluidisé, telle qu'indiquée dans le tableau 1 présenté plus haut.

Des membranes métalliques tubulaires, comprenant une couche d'alliage palladium/argent (23 % d'argent), disposées de manière coaxiale afin d'augmenter la surface effective de membrane, sont utilisées pour une séparation opérée à une température de 250 °C et une pression amont de 1,5 MPa. La pression en aval de la membrane est de 0,2 MPa. Les membranes utilisées ne sont perméables qu'à l'hydrogène et elles présentent par conséquent une sélectivité totale de séparation hydrogène/hydrocarbure et hydrogène/monoxyde de carbone.

La charge de reformage servant de charge (alimentation (3) selon la figure 1) à l'étape d'hydrogénation catalytique se compose de Paraffines (63,55 %), de Naphtènes (22,95 %) et d'Aromatiques (13,47 %), dont la répartition pondérale en nombre de carbone est présentée dans le tableau 2 ci après :

**Tableau 2**

| **Composition de la charge hydrocarbonée** | | | |
|---|---|---|---|
| | Paraffines | Naphtènes | Aromatiques |
| C6 | 5,49 | 2,3 | 0,41 |
| C7 | 16,83 | 5,8 | 3,18 |
| C8 | 21,38 | 8,27 | 6,8 |
| C9 | 17,26 | 5,95 | 3,08 |
| C10 | 2,59 | 0,63 | - |

La charge de reformage catalytique est hydrogénée sur un catalyseur au Ni en utilisant le perméat de la membrane métallique, qui n'est perméable qu'à l'hydrogène. Le catalyseur contient 20 % de Ni sous forme oxyde supporté sur une alumine de transition de 130 m²/g de surface spécifique. II est préalablement activé au contact d'un flux d'hydrogène à une température de 400 °C pendant 4 h. La composition molaire du mélange réactionnel est de 18 % de perméat (contenant l'hydrogène ayant traversé la membrane) et de 82 % d'alimentation hydrocarbonée (charge de reformage). Dans ces conditions, la conversion de l'hydrogène est de 99 % à VVH = 10 h⁻¹. Le taux de récupération d'hydrogène est de 50 %.

Le naphta hydrogéné est ensuite dirigé vers le procédé de reformage catalytique, pour libérer l'hydrogène par déshydrogénation des hydrocarbures.

### Exemple 2

Dans cet exemple, la charge à séparer présente une composition typique du Tableau 1 d'un gaz sec issu de craquage catalytique en lit fluidisé.

Une membrane carbone, en forme de fibres creuses et de surface spécifique élevée (système compact de rapport surface membranaire/volume de perméateur supérieur à 5000 m²/m³) est lors d'une séparation opérée à une température de 150 °C et une pression amont de 1,5 MPa. La pression en aval de la membrane est de 0,3 MPa. La membrane utilisée présente une sélectivité de séparation hydrogène/hydrocarbure de 450 et hydrogène/monoxyde de carbone de 30. La charge de reformage catalytique est hydrogénée sur le même catalyseur que dans l'Exemple 1 en utilisant le perméat de la membrane carbone. La composition molaire du mélange réactionnel est de 18 % de perméat et de 82 % de charge de reformage, l'alimentation se faisant à courants croisés. Le perméat issu de la séparation par membrane contient principalement de l'hydrogène mais également des traces de CO et CO₂ (1,7 ^{E-04} % molaire) et des hydrocarbures (1,4 ^{E-03} molaire). Dans ces conditions, la conversion de l'hydrogène est de 93 % à VVH de10 h⁻¹. Le taux de récupération d'hydrogène est de 80 % par rapport à la charge de gaz sec.

### Exemple 3

Une membrane organique, comprenant un polymère de type polyaramide de surface spécifique élevée, est mise en oeuvre pour une séparation opérée à une température de 90 °C et une pression amont de 1,5 MPa. La pression en aval de la membrane est de 0,2 MPa. La membrane utilisée présente une sélectivité de séparation hydrogène/hydrocarbure et hydrogène/monoxyde de carbone de 300 pour l'extraction sélective de 50 % de l'hydrogène présent dans la charge.

La charge de reformage catalytique est hydrogénée sur le même catalyseur que dans l'Exemple 1 en utilisant le perméat de la membrane organique. La composition molaire du mélange réactionnel est de 14 % de perméat issu de la séparation par membrane et de 86 % de charge de reformage. Le perméat contient principalement de l'hydrogène mais également des traces de CO et CO₂ (8,4 ^{E-06} % molaire), des hydrocarbures (1 ^{E-03} molaire) et des traces de H₂S (2,8 ^{E-09} molaire). Dans ces conditions, une conversion de 71 % est atteinte pour une VVH de 2 h⁻¹. On récupère environ 75 % de l'hydrogène contenu dans la charge.

## Revendications

1. Procédé de récupération d'hydrogène dans un effluent gazeux riche en hydrocarbures **caractérisé en ce qu'**il comprend la mise en oeuvre de :
- une étape (a) dans laquelle on fait passer un effluent gazeux riche en hydrocarbures au contact de la face amont d'une membrane sélective à l'hydrogène, à une pression P1 ;
- une étape (b) dans laquelle on fait circuler un flux contenant un ou plusieurs composé(s) insaturé(s) au contact de la face aval de ladite membrane, à une pression P2 inférieure à P1 et en présence d'un catalyseur, de manière à hydrogéner au moins en partie ledit (ou lesdits) composé(s) insaturé(s) au moyen d'au moins une partie de l'hydrogène passant par perméation de ladite face amont à ladite face aval de ladite membrane sélective ; et
- une étape (c) dans laquelle on transporte le flux contenant le (ou les) composé(s) hydrogéné(s) dans l'étape (b).

2. Procédé selon la revendication 1 **caractérisé en ce que** ledit effluent riche en hydrocarbures est une coupe de gaz sec issue d'un procédé choisi parmi le craquage catalytique en lit fluidisé, le vaporeformage, le reformage catalytique, la gazéification, l'oxydation partielle, le procédé autotherme associant reformage et oxydation partielle, la cokéfaction et la viscoréduction.

3. Procédé selon la revendication 2 **caractérisé en ce que** ledit effluent riche en hydrocarbures est une coupe de gaz sec issue du craquage catalytique en lit fluidisé.

4. Procédé selon l'une des revendications 1 à 3 **caractérisé en ce que** le catalyseur utilisé dans l'étape (b) se présente sous la forme de billes ou d'extrudés et comprend au moins un métal du groupe VIII déposé sur un support, organique ou inorganique, choisi parmi les oxydes de métaux des groupes II, III ou IV de la classification périodique des éléments, pris seuls, en mélange entre eux ou en mélange avec d'autres oxydes de métaux de la classification périodique, le charbon, les zéolithes et les mélanges d'oxydes de métaux des groupes II, III et/ou IV avec un matériau zéolithique.

5. Procédé selon l'une des revendications 1 à 3 **caractérisé en ce que** la phase active métallique du catalyseur utilisé dans l'étape (b) et qui comprend au moins un métal du groupe VIII est partie intégrante du matériau membranaire.

6. Procédé selon l'une des revendications 4 et 5 **caractérisé en ce que** la phase active du catalyseur utilisé dans l'étape (b) contient du nickel ou du platine seul ou en combinaison.

7. Procédé selon l'une des revendications 1 à 6 **caractérisé en ce que** les conditions opératoires des étapes (a) et (b) incluent une pression d'alimentation en amont de la membrane de 0,2 à 5 MPa, une pression du perméat en aval de la membrane de 0,1 à 0,5 MPa

8. Procédé selon l'une des revendications 1 à 7 **caractérisé en ce que** la vitesse volumique horaire (VVH) du flux contenant le(s) composé(s) à hydrogéner dans l'étape (b) et de 0,5 à 30 h⁻¹ par rapport au catalyseur d'hydrogénation.

9. Procédé selon l'une des revendications 1 à 8 **caractérisé en ce que** l'on utilise une membrane inorganique ou métallique.

10. Procédé selon la revendication 9 **caractérisé en ce que** ladite membrane est choisie parmi les membranes à base de fibres de carbone et les membranes à base de silice microporeuse déposée sur un support poreux, les membranes zéolithes supportées par des matrices poreuses ou métalliques, les membranes de type oxydes mixtes à transport sélectif d'hydrogène, et les membranes comprenant un alliage de palladium avec un autre métal.

11. Procédé selon l'une des revendications 9 et 10 **caractérisé en ce que** l'on utilise une membrane inorganique ou métallique et la température à l'étape (b) est de 20 à 280 °C.

12. Procédé selon l'une des revendications 1 à 8 **caractérisé en ce que** l'on utilise une membrane organique.

13. Procédé selon la revendication 12 **caractérisé en ce que** ladite membrane organique comprend un polymère choisi parmi les polyimides, les polyaramides, les polycarbonates, les polysulfones et les fluorures de polyvinyle.

14. Procédé selon l'une des revendications 12 et 13 **caractérisé en ce que** l'on utilise une membrane organique et la température à l'étape (b) est de de 20 °C à 180 °C.

15. Procédé selon l'une des revendications 1 à 14 **caractérisé en ce que** la charge traitée est riche en impuretés H₂S et/ou CO et **en ce que** l'on met en oeuvre une étape préliminaire de captation sélective de H₂S et/ou CO.

16. Procédé selon la revendication 15 **caractérisé en ce que** l'on effectue la captation sélective de H₂S et/ou CO par adsorption préférentielle.

17. Procédé selon la revendication 15 **caractérisé en ce que** l'on effectue la captation sélective de H₂S et/ou CO avec une membrane perméable à H₂S et/ou CO.

18. Procédé selon l'une des revendications 1 à 17 **caractérisé en ce qu'**il comporte en outre une étape (d) dans laquelle on réalise une réaction de déshydrogénation du (ou des) composé(s) hydrogéné(s) transporté(s) à l'étape (c), de manière à récupérer au moins une partie de l'hydrogène consommé par l'hydrogénation de l'étape (b).

19. Procédé selon la revendication 18 **caractérisé en ce que** le flux que l'on fait circuler au contact de la face aval de ladite membrane dans l'étape (b) contient un ou plusieurs hydrocarbure(s) aromatique(s) et la réaction de déshydrogénation de l'étape (d) est une réaction de reformage.

20. Procédé selon la revendication 19 **caractérisé en ce que** le flux que l'on fait circuler au contact de la face aval de ladite membrane dans l'étape (b) est une coupe naphta de distillation atmosphérique.
